Europäisches Patentamt

European Patent Office

Office européen des brevets

(19)

(11) Veröffentlichungsnummer: **0 346 574 B1**

# EUROPÄISCHE PATENTSCHRIFT

(12)

(45) Veröffentlichungstag der Patentschrift: **28.10.92**

(51) Int. Cl.⁵: **G11B 15/44**

(21) Anmeldenummer: **89104796.1**

(22) Anmeldetag: **17.03.89**

(54) **Kassettentonbandgerät für Reversebetrieb.**

(30) Priorität: **21.04.88 DE 3813377**

(43) Veröffentlichungstag der Anmeldung:
**20.12.89 Patentblatt 89/51**

(45) Bekanntmachung des Hinweises auf die
Patenterteilung:
**28.10.92 Patentblatt 92/44**

(84) Benannte Vertragsstaaten:
**AT CH DE FR GB IT LI SE**

(56) Entgegenhaltungen:
**EP-A- 0 121 282**
**DE-A- 3 126 765**
**DE-A- 3 211 321**
**DE-A- 3 230 185**
**US-A- 4 538 753**

(73) Patentinhaber: **Blaupunkt-Werke GmbH**
**Robert-Bosch-Strasse 200**
**W-3200 Hildesheim(DE)**

(72) Erfinder: **Felten, Gerold**
**Hainholz 52**
**W-3202 Bad Salzdetfurth(DE)**

(74) Vertreter: **Eilers, Norbert, Dipl.-Phys.**
**Blaupunkt-Werke GmbH Robert-**
**Bosch-Strasse 200**
**W-3200 Hildesheim(DE)**

## Beschreibung

Die Erfindung betrifft ein Kassettentonbandgerät für Reversebetrieb mit einem manuell bedienbaren Tastenschieber zur Umschaltung der Laufrichtung nach dem Oberbegriff des Anspruchs 1.

Bei derartigen Kassettentonbandgeräten müssen für eine gewünschte Umkehr der Abspielrichtung unter anderem die Tonkopfsysteme elektrisch, die Gummiandruckrollen sowie zur Laufrichtungsänderung das Getriebe mechanisch umgeschaltet werden. Da der hierfür erforderliche Kraftaufwand für eine manuell betätigbare Drucktaste zu groß ist, können zu diesem Zweck starke Elektromagneten oder vom Motor des Gerätes antreibbare Servomechaniken verwendet werden.

Eine aus der DE-A1-3126765 bekannte Betriebsart-Wähleinrichtung für Tonbandgeräte oder dergleichen umfaßt eine Nockenfläche an einem drehbaren Nocken, eine Kopplungseinrichtung zwischen einem Betätigungshebel und dem drehbaren Nocken zur Koppelung der Gleitbewegung des Betätigungshebels mit der Drehbewegung des Nockenrades, und einer Verbindungseinrichtung zwischen dem Betätigungshebel und der Koppelungseinrichtung. Der Betätigungshebel wird durch die Koppelungseinrichtung bei Drehung des Nokkenrades unmittelbar nach Beginn der Drehung des Nockenrades mitgenommen.

Bei einer Servomechanik ist es erforderlich, zur Umschaltung der Reverse-Funktionen einen Schaltschieber vorzusehen, der von einem vom Motor des Gerätes antreibbaren Schaltrad in zwei Schaltstellungen steuerbar ist. Am Schaltrad sind zwei um 180 Grad versetzte Anschlagflächen vorzusehen, über die das Schaltrad mittels eines anliegenden Sperrhebels verriegelbar ist. Zur Durchführung eines Schaltvorgangs muß das Schaltrad für eine halbe Umdrehung entriegelt werden. Dieses wird dadurch erreicht, daß ein manuell betätigter Tastenschieber einen mit ihm in Wirkverbindung stehenden Auslösehebel bewegt und einen mit ihm in Wirkverbindung stehenden Sperrhebel soweit verschwenkt, daß die jeweilige Anschlagfläche des Schaltrades freigesetzt wird, worauf das unter einer Federspannung stehende Schaltrad mit einem Antriebsrad in Eingriff gebracht wird und eine halbe Umdrehung ausführt.

Bei einer derartigen Umschalteinrichtung ist es jedoch möglich, daß ein sehr langsam gedrückter oder ein in einer bestimmten Position verharrender Tastenschieber ein mehrmaliges oder andauerndes Umschalten der Laufrichtung bewirken kann.

Der Erfindung liegt die Aufgabe zugrunde, eine derartige Reverse-Umschalteinrichtung so zu verbessern, daß bei einer Betätigung des Tastenschiebers eine eindeutige Umschaltung erfolgt.

Diese Aufgabe wird bei einem gattungsgemäßen Kassettenlaufwerk durch die kennzeichnenden Merkmale des Anspruchs 1 gelöst.

Die mit der Erfindung erzielten Vorteile bestehen insbesondere darin, daß mit jeder Betätigung des Tastenschiebers ein zuverlässiges eindeutiges Reverseschalten erfolgt, da während einer Umschaltphase eine sichere Trennung der Wirkverbindung zwischen Tastenschieber und Sperrhebel erfolgt und der Auslösehebel erst wieder nach vollständiger Rückkehr des Tastenschiebers in die Ausgangslage betätigt werden kann.

Die Maßnahmen nach Anspruch 2 gestatten eine besonders vorteilhafte Ausgestaltung der Steuerkurve.

Ein Ausführungsbeispiel der Erfindung ist im Prinzip in der Zeichnung dargestellt und wird im folgenden näher beschrieben.

Es zeigen

| | |
|---|---|
| Figur 1 | einen die Reverse-Funktionen umschaltenden Schaltschieber in einer ersten Schaltstellung zusammen mit einem Schaltrad und einem Antriebszahnrad, |
| Figur 2 | den mit einer Steuerkurve versehenen Teil des Schaltrades in der ersten Schaltstellung in Verbindung mit einem Sperrhebel, einem Auslösehebel und einem Tastenschieber und |
| Figur 3 bis 6 | den Ablauf eines Schaltvorganges. |

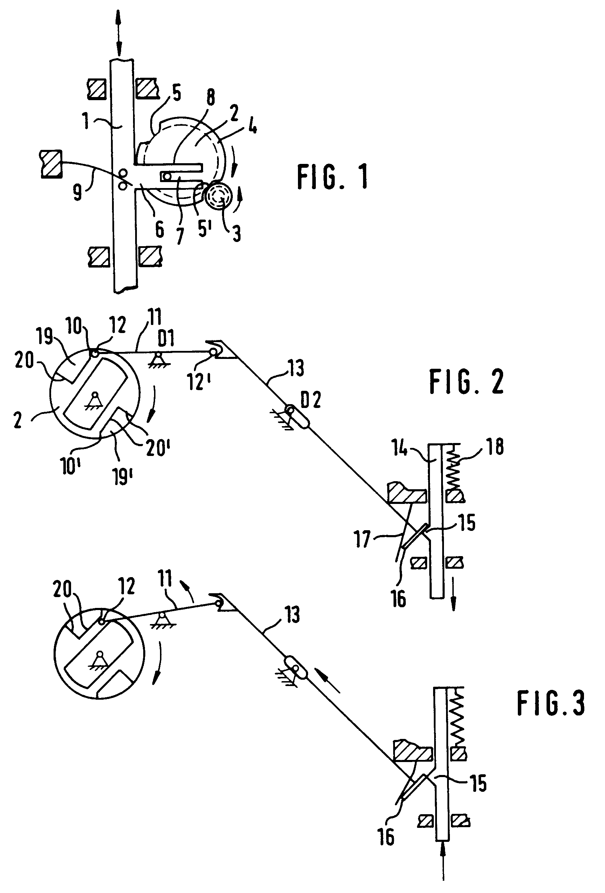

Ein zur Umschaltung der Reverse-Funktionen nicht dargestellter Bauelemente dienender Schaltschieber 1 steht nach Figur 1 mit einem Schaltrad 2, welches über ein Antriebszahnrad 3 antreibbar ist, in Wirkverbindung. Das Schaltrad 2 weist einen Zahnkranz 4 auf, der an zwei gegenüberliegenden Seiten durch Aussparungen 5, 5' derart unterbrochen ist, daß das dem Zahnkranz 4 zugeordnete Antriebszahnrad 3 in zwei um 180° versetzten Stellungen außer Eingriff mit den Zähnen des Zahnkranzes 4 ist. Die Wirkverbindung zwischen dem Zahnrad 2 und dem Schaltschieber 1 erfolgt über einen in einem Ausleger 6 des Schaltschiebers 1 vorgesehenen, senkrecht zur Bewegungsrichtung des Schaltschiebers 1 angeordneten Schlitz 7, in dem ein exentrisch auf dem Schaltrad 2 angeordneter Zapfen 8 gleitbar gelagert ist.

Der Schaltschieber 1 ist mit einer ersten Feder 9 derart verbunden, daß eine Auslenkung des Schaltschiebers 1 von einer gedachten Mittelstellung aus, in beide Richtungen gegen die Kraft dieser Feder 9 erfolgen muß. Der Zapfen 8 ist so auf dem Schaltrad 2 angeordnet, daß sich das Schaltrad 2 bei einer Weiterdrehung um etwa 45° nach dem Erreichen der größten Auslenkung des Schaltschiebers in der Position befindet, in der es mit dem Antriebszahnrad außer Eingriff ist.

Wie aus Figur 2 ersichtlich, weist das Schaltrad 2 in einer weiteren Ebene zwei um 180° versetzte Anschlagflächen 10, 10' für einen in einem Drehpunkt D1 gelagerten Sperrhebel 11 auf. Der Sperrhebel 11 liegt mit einem als Zapfen 12 ausgebildeten Ende an der einen Anschlagfläche 10 an und hindert so das über die erste Feder 9 in seiner Solldrehrichtung vorgespannte Schaltrad 2 daran, mit seinem Zahnkranz 4 in das Antriebszahnrad 3 einzugreifen. Ein diagonal zum Sperrhebel 11 angeordneter, nahe seiner Mitte in einem Drehpunkt D2 längsverschiebbar und drehbar gelagerter Auslösehebel 13 steht über ein gabelförmig ausgebildetes Ende mit einem am anderen Ende des Sperrhebels 11 vorgesehenen weiteren Zapfen 12' in Wirkverbindung. Ein über einen nicht dargestellten Drucktastenknopf bedienbarer, senkrecht zur Längsachse des Sperrhebels 11 angeordneter Tastenschieber 14 weist einen dreieckförmig ausgebildeten Schaltnocken 15 auf, an dem der Auslösehebel 13 mit einer senkrecht zu seiner Längsachse angeordneten Kontaktfläche 16 anliegt, wobei eine zweite Feder 17 den Auslösehebel an den Tastenschieber 14 anlegt. Eine dritte Feder 18 hält den Tastenschieber 14 in seiner Ruhestellung. Jede der beiden Anschlagflächen 10, 10' wird von einem ihr zugeordneten Vorsprung 19, 19' des Schaltrades 2 gebildet, der vom äußeren Rand ausgehend zuerst radial nach innen gerichtet, die Anschlagfläche 10, 10' bildet, dann über einen Teilabschnitt einer Kreissehne und anschließend radial nach außen zum Rand des Schaltrades verlaufend eine Steuerkurve 20, 20' für den Zapfen 12 des Sperrhebels 11 bildet.

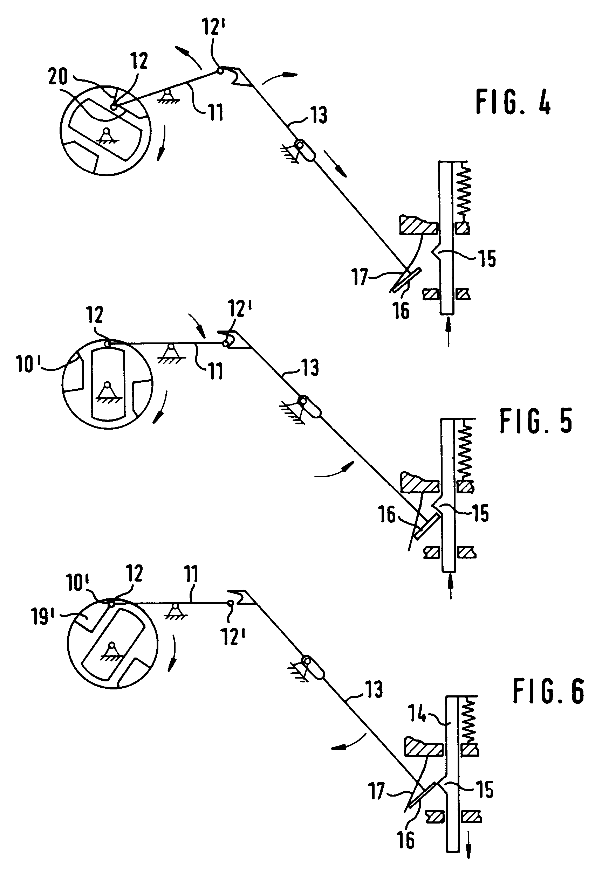

Bei dem nachfolgend beschriebenen Umschaltvorgang wird von einer ersten Schaltstellung nach Figur 1 ausgegangen, wobei sich das vom Motor angetriebene Antriebszahnrad 3 in der markierten Drehrichtung dauernd dreht. Wird nun der Tastenschieber 14 gem. Figur 3 gedrückt, so bewegt dieser über den Schaltnocken 15 und die Kontaktfläche 16 des Auslösehebel 13 in seiner Längsrichtung und lenkt den mit ihm in Wirkverbindung stehenden Sperrhebel 11 derart aus, daß dieser die Anschlagfläche 10 freigibt und damit das Schaltrad 2 entriegelt, worauf das über die erste Feder 9 in Verbindung mit dem Schaltschieber 1 vorgespannte Schaltrad 2 mit seinem Zahnkranz 4 in die Zähne des Antriebszahnrades 3 eingreift, wodurch dieses nun ebenfalls angetrieben wird. Durch den kreissehnenförmig ausgebildeten Teil der Steuerkurve 20 führt der Sperrhebel 11 dabei einen Überhub aus und schwenkt den mit ihm in Wirkverbindung stehenden Auslösehebel 13 gem. Figur 4 vom Schaltnocken 15 des Tastenschiebers 14 weg. Dabei bewegt die zweite Feder 17 den Auslösehebel 13 wieder in seine längsverschiebungsbezogene Ausgangsstellung zurück. Dadurch gerät die Kontaktfläche 16 hinter den Schaltnocken 15 des noch gedrückten Tastenschiebers 14. Nachdem der Sperrhebel 11 nicht mehr durch die Steuerkurve 20 ausgelenkt ist, nimmt er seine ursprüngliche Ruhestellung ein. Auch der Auslösehebel 13 schwenkt gemäß Figur 5 wieder in seiner Ausgangsposition zurück. Nach Überschreiten der maximalen Auslenkung des Schaltschieber 1 wirkt die erste Feder 9 wieder in Drehrichtung des Schaltrades 2. Dadurch wird das Antriebszahnrad 3 außer Eingriff mit dem Schaltrad 2 gebracht und durch das Anliegen des Sperrhebels 11 an der Anschlagfläche 10' ein neuer Eingriff verhindert. Beim Loslassen des ggf. noch gedrückten Tastenschiebers 14 kann der Auslösehebel 13 zurückschwenken, ohne den Sperrhebel 11 zu betätigen.

**Patentansprüche**

1. Kassettentonbandgerät für Reversebetrieb mit einem manuell bedienbaren Tastenschieber (14) zur Umschaltung der Laufrichtung, einem zwischen seinen Enden schwenk- und längsverschiebbar gelagerten Auslösehebel (13), der mit einem Ende in Wirkverbindung mit dem Tastenschieber (14) und mit dem anderen Ende in Wirkverbindung mit einem in einem Drehpunkt gelagerten Sperrhebel (11) steht, wobei der Sperrhebel (11) an einer von zwei um 180 Grad versetzten Anschlagflächen (10, 10') eines zwei Schaltstellungen aufweisenden, Reverse-Funktionen umschaltenden, einen Schaltschieber (1) steuernden Schaltrades (2) anliegt, das mit einem an zwei gegenüberliegenden Seiten durch Aussparungen unterbrochenen Zahnkranz (4) versehen ist, der nach einer über den Tastenschieber (14) eingeleiteten Entriegelung der Anschlagflächen (10, 10') durch den Sperrhebel (11) und infolge einer gegen den Sperrhebel (11) gerichteten Federspannung des Schaltrades (2) mit seinen Zähnen in die Verzahnung eines Antriebsrades (3) eingreift,
dadurch gekennzeichnet,
daß die Anschlagflächen (10, 10') des Schaltrades (2) in daran anschließende Steuerkurven (20, 20') übergehen, die derart ausgebildet sind, daß sie bei einer vorgegebenen Drehrichtung des Schaltrades (2) den Auslösehebel (13) über den mit ihnen im Eingriff stehenden Sperrhebel (11) so auslenken, daß die Wirkverbindung zwischen Sperrhebel (11) und Tastenschieber (14) während der Umschaltphase aufgehoben ist, daS der über den Tastenschieber (14) und den Auslösehebel (13) betätigbare Sperrhebel (11) nach der Entriegelung des Schaltrades (2) eine durch die Steuerkurve (20, 20') bedingte Überhubbewegung ausführt und dabei den Auslösehebel (13) derart schwenkt, daß eine einem Schaltnocken (15) des Tastenschiebers (14) zugeordnete Kontaktfläche (16) des Auslösehebels (13) die Betätigungsflanke des Schaltnockens (15) während der durch die Länge der anschließenden Steuerkurven (20, 20') vorgegebenen Zeit nicht berührt, daß das mit einem Zapfen (12') des Sperrhebels (11) in Wirkverbindung stehende gabelförmige Ende des Auslösehebels (13) derart ausgebildet ist, daß der Tastenschieber (14) beim Zurückgleiten den Auslösehebel (13) am Zapfen (12') des Sperrhebels (11) vorbeischwenkt, so daß bei betätigtem Tastenschieber (14), anschließend die Kontaktfläche (16) nicht mehr mit der Betätigungsflanke des Schaltnockens (15) in Eingriff kommt und der Auslösehebel (13) erst wieder nach vollständiger Rückkehr des Tastenschiebers (14) in die Ausgangslage betätigt werden kann.

2. Kassettentonbandgerät nach Anspruch 1, dadurch gekennzeichnet,
daß jede der Steuerkurven (20, 20') derart ausgebildet ist, daß sie von der am äußeren Rand des Schaltrades (2) angeordneten Anschlagfläche (10, 10') für den Sperrhebel (11) ausgehend, zuerst nach innen gerichtet, über einen Teilabschnitt einer Kreissehne und dann radial nach außen gerichtet zum Rand des Schaltrades (2) verläuft.

## Claims

1. Audio cassette player for reversible operation with a manually operable button slide (14) for switching over the direction of running, with a release lever (13) which is supported in swivelable and longitudinal displaceable fashion between its ends and is in operative connection by one end with the button slide (14) and in operative connection by the other end with a locking lever (11) supported at a fulcrum, the locking lever (11) resting against one of two stop faces (10, 10'), offset by 180 degrees, of a switch wheel (2) which has two switch positions, switches over reverse functions, controls a switching slide (1) and is provided with a toothed rim (4) which is interrupted on two opposite sides by recesses and, after unlocking of the stop faces (10, 10') by the locking lever (11), the said unlocking being initiated via the button slide (14), and as a result of a spring stress of the switch wheel (2) directed counter to the locking lever (11), engages with its teeth in the toothing of a driving wheel (3), characterised in that the stop faces (10, 10') of the switch wheel (2) merge into adjoining control cams (20, 20') which are designed in such a way that, given a predetermined direction of rotation of the switch wheel (2), they deflect the release lever (13) via the locking lever (11), in engagement with it, in such a way that the operative connection between the locking lever (11) and the button slide (14) is cancelled during the switchover phase, in that, after the unlocking of the switch wheel (2), the locking lever (11) actuable via the button slide (14) and the release lever (13) executes an overtravel movement caused by the control cam (20, 20') and, in the process, swivels the release lever (13) to such an extent that a contact face (16) of the release lever (13), which contact face is assigned to a switching dog (15) of the button slide (14), does not touch the actuating flank of the switching dog (15) during the time predetermined by the length of the adjoining control cams (20, 20'), in that the fork-shaped end of the release lever (13), which end is in operative connection with a peg (12') of the locking lever (11), is designed in such a way that as the button slide (14) slides back, it swivels the release lever (13) past the peg (12') of the locking lever (11), with the result that, with the button slide (14) actuated, the contact face (16) subsequently no longer comes into engagement with the actuating flank of the switching dog (15) and the release lever (13) can only be actuated again after the button slide (14) has returned completely into the starting position.

2. Audio cassette player according to Claim 1, characterised in that each of the control cams (20, 20') is designed in such a way that, starting from the stop face (10, 10') for the locking lever (11), the said stop face being arranged at the outer edge of the switch wheel (2), it first of all runs inwards, over part of a chord and then radially outwards to the edge of the switch wheel (2).

## Revendications

1. Magnétophone à cassettes pour mode réversible de service avec un poussoir à touche (14) pour inversion du sens de marche, un levier de désengagement (13) monté pivotable et mobile longitudinalement entre ses extrémités, qui se trouve par une de ses extrémités en liaison opérationnelle avec le poussoir à touche (14) et par son autre extrémité en liaison opérationnelle avec un levier d'arrêt (11) monté sur un axe fixe, le levier d'arrêt (11) appuyant sur une des deux surfaces de butée (10, 10') décalées de 180 degrés, d'une roue de commande (2) comportant deux position de réglage et pouvant inverser les fonctions réversibles en agissant sur un poussoir de commande (1), roue (2) qui est munie d'une couronne dentée (4) interrompue sur deux côtés opposés par des évidements, couronne (4) qui engrène par ses dents dans la denture d'une roue motrice (3) après un déverrouillage des deux surfaces de butée (10, 10') provoqué par le poussoir à touche (14) et opéré par le levier d'arrêt (11) et, par suite, d'une tension de ressort de la roue de commande (2) dirigée contre le levier d'arrêt (11), magnétophone à cassettes caractérisé :

- en ce que les surfaces de butée (10, 10') de la roue de commande (2) se convertissent en cames de commande (20, 20') jointe à elles et qui sont réalisées de façon à dévier lors d'une rotation donnée de la roue de commande (2) le levier de désengagement (13) par l'intermédiaire du levier d'arrêt (11) se trouvant en prise avec elles, en interrompant ainsi la liaison opérationnelle entre le levier d'arrêt (11) et le poussoir à touche (14) pendant la phase d'inversion,

- en ce que le levier d'arrêt (11) actionné par l'intermédiaire du poussoir à touche (14) et du levier de désengagement (13) effectue après le déverrouillage de la roue de commande (2) un mouvement de course vers le haut et faire alors pivoter le levier de désengagement (13), de sorte qu'une surface de contact du levier de désengagement (13) associée à une came porte levier (15) du poussoir à touche (14) cesse d'être en contact avec le flanc de commande de la came de commande (15) pendant le temps correspondant à la longueur des cames de commande (20, 20') raccordées,

- en ce que l'extrémité en forme de fourche du levier de désengagement (13) se trouvant en liaison opérationnelle avec un téton (12') du levier d'arrêt (11) est réalisée de façon que le poussoir à touche (14) fasse pivoter en avant lors du glissement de retour, le levier de désengagement (13) sur le téton (12) du levier d'arrêt (11), de sorte que, après actionnement du poussoir à touche (14), la surface de contact (16) ne vient plus en prise avec le flanc de commande de la came de commande (15) et le levier de désengagement (13) peut être à nouveau commandé après retour complet du poussoir à touche (14) dans la position de départ.

2. Magnétophone à cassettes selon la revendication 1, caractérisé :

- en ce que chacune des deux cames de commande (20, 20') est réalisée de façon à diriger d'abord vers son intérieur le levier d'arrêt (11) à partir de la surface de butée (10, 10') disposée sur le bord extérieur de la roue de commande (2), puis sur un tronçon partiel d'une corde de cercle et ensuite de le conduire radialement vers l'extérieur en direction du bord de la roue de commande (2).

FIG. 1

FIG. 2

FIG.3

FIG. 4

FIG. 5

FIG. 6